# EUROPÄISCHE PATENTANMELDUNG

(11) **EP 0 677 485 A1**
(43) Veröffentlichungstag der Anmeldung: **18.10.1995**
(21) Anmeldenummer: 94810175.3
(22) Anmeldetag: 22.03.1994
(51) Int. Cl.: C02F 5/10, C02F 5/12, C02F 5/14

(54) **Mittel zur Verhinderung von Ausscheidungen in Prozesswässern**

(71) Anmelder: FABORGA S.A., CH-1200 Genève (CH)
(72) Erfinder: Graf, Anton, CH-1200 Genf (CH)
(74) Vertreter: Gachnang, Hans Rudolf

(57) **Zusammenfassung**

Die Erfindung betrifft die Steigerung der Wirkung von Mitteln, die in Heizungs- und Dampferzeugungsanlagen gegen Kesselstein sowie in Kühlwasserkreisläufen zur Verhinderung von Ausfällungen eingesetzt werden, durch Zusatz hydrotroper Stoffe. Die erreichten Verbesserungen werden einer besseren Solubilisierung der Bestandteile des Mittels zugeschrieben. Mit entsprechend ausgewählten hydrotropen Mitteln lassen sich sogar normalerweise nicht kombinierbare Mischungen aus Fettalkylaminen und Phosphonaten zu verträglichen Produkten mischen. Bei der Verwendung biologisch nicht abbaubarer Einzelkomponenten können wirksamere Kühlkreislauf-Konditioniermittel erhalten werden, die keiner zusätzlichen Konservierungsmassnahme bedürfen.

## Beschreibung

Die vorliegende Erfindung betrifft Mittel zur Verhinderung der Ausscheidung von Kesselstein, kesselsteinähnlichen Ablagerungen und anderen Abscheidungen in Prozesswässern, d.h. in Anlagen, in denen Wasser verwendet und/oder im Kreislauf geführt wird, welches zur Ausfällung neigende Stoffe enthält, insbesondere Mineralsalze, nach dem Oberbegriff des ersten unabhängigen Patentanspruchs. Weiterhin betrifft die Erfindung ein Verfahren zur Verhinderung von Kesselstein-Abscheidungen und zur Konditionierung von Kühlwasserkreisläufen.

Prozesswässer zur Betreiben von Dampferzeugungsanlagen, Dampf- und Warmwasser-Heizungssystemen und Kühlwasser-Kreisläufen enthalten meistens bestimmte Salze von Erdalkalimetallen, die zunächst in gelöster Form vorliegen, beispielsweise als Hydrogencarbonate, aber beim Erwärmen, bei fortschreitender Aufkonzentrierung durch verdampfendes Wasser oder auch nur durch mechanische Einwirkungen in Pumpen, Drosseln usw. schliesslich in unlöslicher Form ausfallen. Dies führt zu Krustenbildung an Rohr- und Gefässwandungen von Wärmeübertragungsanlagen, wodurch der Wärmeübergang beeinträchtigt wird und bei Dampferzeugungsanlagen die Gefahr besteht, dass örtliche Überhitzungen mit nachfolgendem Bersten der Apparate eintreten. Auch Kühlkreisläufe sind der Gefahr anderweitig schädlicher Ausfällungen und anderer Ausscheidungen ausgesetzt.

Die Betreiber solcher Anlagen sind aus wirtschaftlichen Gründen dazu veranlasst, die Prozesswässer entsprechend vorzubehandeln, derart, dass Ausfällungen vermieden werden, die Korrosionsgefahren auf ein Minimum vermindert werden und das so behandelte Wasser möglichst lange im Kreislauf zu behalten.

Eine Möglichkeit einer Vorbehandlung wäre die vollständige Entfernung der Mineralsalze aus dem Wasser. Die vollkommene Entsalzung des Wassers stellt einen wirtschaftlich nicht vertretbaren Aufwand dar. Ausserdem ist seit langem bekannt, dass entmineralisiertes Wasser gegenüber Eisen und Eisenlegierungen und auch gegenüber Buntmetallen korrodierend wirkt; man weiss, dass Mineralsalze im Prozesswasser die Rohre und Gefässe mit einer dünnen, sehr dichten Schicht einer Ausscheidung überziehen, die das darunterliegende Metall vor Korrosion schützt. Schliesslich ist auch nicht auszuschliessen, dass ein zuvor einmal sorgfältig gereinigtes Wasser im Prozess durch Leckagen wieder Salze aufnimmt und dadurch verunreinigt wird.

Aus den genannten Gründen ist heute bekanntermassen ein Zusatz von Additiven zu den hier angesprochenen Prozesswässern unverzichtbar.

Zu den in der Literatur bereits vorgeschlagenen Wasserzusätzen gehören auch Zusammensetzungen zum Inhibieren einer Krustenbildung und sogar der Ausfällung, wobei sehr unterschiedliche Substanzen genannt werden: Fettalkylpolyamine gemäss FR-A-1'435'023; polymere Derivate von hydrolysiertem Maleinsäureanhydrid, Mischungen aus Derivaten von Polymaleinsäureanhydrid und Polyacryl- sowie Polymethacrylsäure und deren Salze gemäss FR-A-2'116'139 und 2'223'308; Acrylsäurepolymere, die in Form der Säure oder von Salzen im Handel erhältlich sind; Polymere und/oder Copolymere der Acryl- und Methacrylsäure und deren Salze mit ausgesuchtem Molekulargewicht gemäss FR-A-2'514'746; oder auch Terpolymere von Acrylsäure, Methacrylsäure und Itaconsäure sowie deren Salze gemäss FR-A-2'544'722.

In der EP-B1-0'184'558 ist ein Verfahren zur Verhinderung von Kesselstein angegeben, bei dem dem zu behandelnden Wasser ein synergistisch wirkendes Gemisch aus Salzen von Polymeren ethylenisch ungesättigter Carbonsäuren und aliphatischen Polyaminen zugegeben wird.

Alle bekannten Wasserzusätze haben die gemeinsamen und grundsätzlichen Nachteile, dass der Zusatz von Additiven zu Prozesswasser kostenaufwendig ist und dass Nebenwirkungen nicht auszuschliessen sind, sei es durch das zugesetzte Mittel selbst oder durch seine eventuell auftretenden Reaktions- oder Abbauprodukte. Ausserdem sind einige der bisher bekannten Zusammensetzungen nur begrenzt lagerstabil. Dies trifft beispielsweise auch auf Zusammensetzungen auf der Basis von Polycarbonsäuren zu und auch auf manche, die in der EP-B1-0'184'558 beschrieben und beansprucht sind. Dabei handelt es sich in letzterem Falle darum, dass die betreffenden Zusammensetzungen im Laufe der Lagerzeit nichts an ihrer Wirksamkeit verlieren, sich aber zuweilen in zwei Schichten nach Art des Aufrahmens trennen; es ist dann nötig, die Zusammensetzung vor Entnahme von Anteilen wieder zu homogenisieren.

Aufgabe der Erfindung war es, die genannten Nachteile zu verringern und ein Mittel zur Verhinderung der Ausscheidung von Kesselstein, kesselsteinähnlichen Ablagerungen und anderen Abscheidungen in Prozesswässern zu schaffen, das gegenüber den bekannten Mitteln verbessert ist.

Diese Aufgabe wird durch das im ersten unabhängigen Patentanspruch definierte Mittel gelöst; besondere Ausführungsformen bilden den Gegenstand abhängiger Ansprüche. Im zweiten unabhängigen Anspruch ist ein Verfahren zur Verhinderung der Ablagerung von Kesselstein und anderen Ablagerungen definiert.

Erfindungsgemäss besteht das kesselsteinverhindernde Mittel mindestens aus einem oder mehreren Salzen von Polymeren ethylenisch ungesättigter Säuren, gegebenenfalls mindestens einem aliphatischen Polyamin sowie mindestens einem hydrotropen Mittel. Damit wird die erfindungsgemässe Aufgabe gelöst. Ganz überraschend wurde nun gefunden, dass die neuen Mittel bedeutend wirksamer sind als die polymeren Säuren allein, die Polyamine allein und auch die Gemische aus diesen beiden Komponenten. Sofern die eingesetzten hydrotropen Mittel als solche bereits eine (in der Regel sehr geringe) kesselsteinverhütende Wirkung besitzen, so wird diese in den erfindungsgemässen Mitteln drastisch gesteigert. Dies wird weiter unten noch näher beschrieben.

Die in den neuen Mitteln anwesende erste Komponente, nämlich die Salze polymerer Säuren, sind zum grössten Teil bekannt und im bereits besprochenen Dokument EP-B1-0'184'558 ausführlich aufgezählt. Zur Offenbarung der beispielsweise verwendbaren Substanzen wird auf die Beschreibung dieser Patentschrift, insbesondere von Seite 4, Zeile 6, bis Seite 5, Zeile 15 verwiesen. Im allgemeinen handelt es sich um leicht wasserlösliche Salze, nämlich Alkalimetallsalze, von Homo-, Co- und Terpolymeren ethylenisch ungesättigter Säuren und beliebige Gemische solcher Salze. Ausserdem sind die von den obigen polymeren Säuren abgeleiteten sogenannten Threshold-Mittel geeignet; unter diesem Begriff werden, wie dem Fachmann bekannt ist, solche Substanzen verstanden, die schon in unterstöchiometrischen Mengen eine Ausfällung schwerlöslicher Mineralsalze im Prozesswasser verhindern. Man nimmt an, dass diese Wirkung durch eine Verkapselung der sich bildenden Impfkristalle zustandekommt.

Nach weiterer Erfindung wurde nun festgestellt, dass die neuen erfindungsgemässen Mittel eine noch bessere Löslichkeit und Stabilität besitzen, wenn man nicht Alkalisalze der genannten polymeren Säuren, sondern Salze der Säuren mit Alkylaminen verwendet, insbesondere mit Aminen, die nicht oder nur schwer biologisch abbaubar sind. Solche Salze sind normalerweise nicht handelsüblich; man erhält sie durch Neutralisation der bei der Polymerisation gebildeten Säuren mit dem entsprechenden, gewünschten Amin.

Hydrotrope Mittel sind in der Literatur in grosser Anzahl bekannt. Als zweite Komponente der erfindungsgemässen Mittel, die hydrotropen Substanzen, eignen sich insbesondere Verbindungen mit einem organischen, 4 bis 12 C-Atome enthaltenden gerad- oder verzweigtkettigen aliphatischen Rest, einem cycloaliphatischen Rest, oder einem ein- oder zweikernigen aromatischen System, das auch Ringheteroatome enthalten kann. Diese Definitionen schliessen gängige Substituenten wie Nitro- und Alkylgruppen ein. Die hydrotropen Mittel sind weiterhin durch die Anwesenheit mindestens einer hydrophilen, bevorzugt anionischen Gruppe gekennzeichnet; Beispiele dafür sind gegebenenfalls versalzte Carboxylgruppen und schwefel- und phosphorhaltige Säuregruppen wie Sulfat, Sulfonat, Phosphonat und Phosphat, weiterhin die Hydroxyl- und die Aminogruppe. Verwendbare Verbindungen sind z.B. tert.-Butylsulfat, Benzoate, o-, m- und p-Nitrobenzoate und die entsprechenden Aminobenzoate, Benzolsulfonate, Toluolsulfonate, o-, m- und p-Xylolsulfonat und die entsprechenden tert.-Butylbenzolsulfonate, mit Ethylenoxid und/oder einem anderen Alkylenoxid kettenverlängerte Alkyl-, Aryl- oder Alkarylderivate mit wasserlöslich machender Gruppe wie n-Alkyl-ethylenglycolsulfat sowie verzweigtkettige Alkylethylenglycolsulfate, alkylveretherte Acetate und Propionate, weiterhin cycloaliphatische Amine, aber auch als Thresholdmittel bekannte organische Phosphonate wie die Salze von 2-Phosphonobutan-1,2,4-tricarbonsäure, Ethylendiamintetramethylen-phosphonsäure, Tris-aminomethylenphosphonsäure, und Mischungen verträglicher oben benannter Verbindungen.

Die bevorzugt, aber nicht zwingend anwesende dritte Komponente der neuen, erfindungsgemässen Mittel sind höher aliphatische Polyamine, die auch als Fettpolyamine bezeichnet werden. Beispiele verwendbarer Verbindungen finden sich auf Seite 3, Zeile 53, bis Seite 4, Zeile 5 der oben genannten europäischen Patentschrift. Es wird auf die Offenbarung dieser europäischen Patentschrift verwiesen, die hier nicht wiederholt werden soll.

Das erfindungsgemässe Mittel besteht in seiner einfachsten Form aus 30 bis 70 Gew.-% der oben genannten ersten Komponente, d.h. der polymeren Säure, gerechnet als etwa 50 %ige wässrige Einstellung, und 70 bis 30 Gew.-% der hydrotropen Verbindung. Es ist gegen die Bildung von Kesselstein aktiv und eignet sich insbesondere als Kühlturmadditiv, wenn die hydrotropen Verbindungen biologisch inert sind, d.h. weder dem biologischen Abbau zugänglich sind noch den Stoffwechsel von Kläranlagenbakterien beeinflussen. Eine solche Kombination erweist sich gegenüber den bisher dafür verbreiteten Kühlturmadditiven insofern als sehr vorteilhaft, als auf den Zusatz konservierender Stoffe zum Schutz vor dem Abbau der Additive und zum Schutz der damit betriebenen Anlage vor Verkeimung völlig verzichtet werden kann, weil sie Mikroorganismen keinen Nährstoff bietet und aufgrund der dispergierenden Eigenschaften die Ansiedlung von Bakterien, Algen, Pilzen und Hefen entscheidend erschwert.

Wie oben schon erwähnt wurde, ist es bevorzugt, dem erfindungsgemässen Mittel als dritte Komponente noch ein wie oben definiertes Polyamin zuzusetzen. Durch einen Zusatz von 5 bis 60 Gew.-Teilen eines hydrotropen Mittels lassen sich Zusammensetzungen aus 20 bis 70 Gew.-Teilen Fettpolyamin und 30 bis 80 Gew.-Teilen polymerer Carbonsäuren (als 50 %ige wässrige Einstellung) zu beständigen und mit kaltem Wasser durch blosses Mischen verdünnbaren Kombinationen herstellen. In der Folge wird bei Mengenangaben die polymere Säure und ihre Salze (erste Komponente) als etwa 50 gew.-%ige wässrige Einstellung gerechnet.

Ein bevorzugtes Mittel besteht aus 5 bis 50 Gewichtsteilen der ersten Komponente, vorzugsweise 10 bis 25 Gewichtsteilen; 1 bis 20 Gewichtsteilen des hydrotropen Mittels, bevorzugt 1 bis 6 Gewichtsteilen, und 2 bis 15, insbesondere 2 bis 7 Gewichtsteilen des Polyamins. Ein solches Mittel liegt im allgemeinen als wässrige Mischung vor; sie erscheint völlig klar, entmischt sich beim Lagern nicht und besitzt eine überlegene Wirksamkeit. Die Erfindung gestattet es sogar, Substanzen miteinander zu kombinieren, die als unverträglich gelten; es ist möglich, Phosphonate und Fettpolyamine mit Hilfe ausgewählter hydrotroper Substanzen zu einer klaren Lösung zu vereinigen, wogegen die beiden Stoffe für sich allein sofort zu einem zähen und schwer aus dem Gefäss zu entfernenden Addukt zusammentreten.

Zur Herstellung des Mittels werden im allgemeinen die einzelnen Bestandteile einfach in Form wässriger Lösungen, Suspensionen oder Emulsionen miteinander vermischt. Man erhält eine klare Lösung, die mit Wasser, auch mit kaltem Wasser, beliebig verdünnt werden kann. Dieser Vorteil der problemlosen Verdünnbarkeit wirkt sich auch beim praktischen Einsatz als Kesselspeisewasser-Additiv besonders günstig aus. Probleme, wie sie aus der Anwendung von Fettaminen und Fettpolyaminen in der Praxis gelegentlich in Form von Abscheidungen mangels guter Verteilbarkeit im Kesselspeisewasser auftreten, lassen sich so wirksam beseitigen.

Bei den im folgenden beschriebenen Versuchsverfahren haben Mischungen aus 20 bis 50 Teilen kesselsteinverhindernder Polymere auf der Basis von Polycarbonsäuren und 10 bis 40 Teilen Fettpolyaminen mit 20 bis 40 Teilen hydrotroper Verbindungen bezüglich der Verhinderung von Kesselsteinbildung Ergebnisse erzielt, die diejenigen reiner Kombinationen aus Polycarbonsäuren mit Fettaminen gemäss EP-B1-0'184'558 um ein Mehrfaches übertreffen.

Zur Überprüfung der Wirksamkeit der gewählten Kombinationen wurde einerseits die deutsche VdTÜV-Richtlinie für die Untersuchung von Kesselstein-Gegenmitteln herangezogen und andererseits ein Verfahren, wie es im Dokument DE-A1-3'933'798 beschrieben ist. Nach diesem Verfahren werden Wasserproben, denen ein Additiv zugesetzt wurde, mittels einer Präzisions-Dosierpumpe unter konstanter Förderleistung durch eine Kapillare gedrückt, die in ein am Rückfluss siedendes Wasserbad eintaucht und unter diesen Bedingungen zur Abscheidung von Ausfällungen neigt, sofern entsprechende Erdalkalisalze vorhanden sind.

Dieses Vorhandensein wird dadurch gewährleistet, dass ein Mineralwasser mit einer Härte von 80° d, das durch Stehenlassen an der Luft ins Kalk-Kohlensäure-Gleichgewicht gebracht worden ist, als Basiswasser gewählt wird, dem die Additive zugesetzt werden. Das Wasser, und zwar sowohl mit Additiv versetztes als auch Vergleichswasser ohne Additiv, wird so lange durch die sich allmählich mit abgeschiedenen Inkrustationen zusetzende Kapillare gedrückt, bis auf die fördernde Pumpe ein Gegendruck von 3 MPa einwirkt. Durch eine Automatik wird die Pumpe bei Erreichen dieses Druckes automatisch abgeschaltet. Der Druckverlauf wird mit einem Schreiber registriert und zusätzlich zu der während der Prüfperiode hindurchgepumpten Wassermenge zur Kontrolle verwendet.

Diese beiden Untersuchungsmethoden erlauben eine wesentliche Verkürzung der Zeit, die zur Beobachtung bei der praktischen Untersuchung von Mitteln gegen Kesselstein gebraucht wird. Mit der Methodik nach der VdTÜV-Richtlinie ist eine Prüfung innerhalb von 60 Stunden durchzuführen, und mit der Kapillartechnik ist ein Versuchslauf sogar schon in wenigen Stunden beendet. Der Blindwert ist bereits innerhalb einer halben Stunde erreicht. Beide Methoden führen trotz sehr unterschiedlicher Versuchszeiten in der Tendenz zur gleichen Aussage. Die erste Prüfmethode nach der VdTÜV-Richtlinie hat den Vorteil, bereits für solche Untersuchungen anerkannt zu sein, während die zweite Methode einen grossen Zeitgewinn bringt.

Aufgrund der stark verbesserten Wirksamkeit der neuen erfindungsgemässen Mittel hat man die Wahl, sie entweder in der gleichen Konzentration einzusetzen wie die bekannten Mittel und dabei eine mehr als verdoppelte Standzeit im Betrieb zu erreichen, oder sie nur mit der Hälfte oder weniger der bekannten Mittel anzuwenden. Beide Massnahmen können natürlich kombiniert werden. Zur Zeit wird die Zugabe etwa der halben Menge bevorzugt. Die anzuwendenden Konzentrationen können fast beliebig gewählt werden und richten sich nach den Eigenschaften des jeweiligen Prozesswassers und nach wirtschaftlichen Gesichtspunkten. Die Kühlturmadditive wendet man im allgemeinen in Mengen von etwa 5 bis 100 ppm an, bevorzugt etwa 50 ppm. Speisewasseradditive werden in Anteilen von 5 bis 50 ppm zugesetzt, bevorzugt etwa 5 bis 10 ppm. Diese Anteile beziehen sich jeweils auf das Gewicht der Mittel, in denen die vorhandenen Wirkstoffe etwa 25 Gew.-%, Rest Wasser, ausmachen.

Die Erfindung soll nun an einigen Beispielen weiter erläutert werden. Die Beispiele schränken die Erfindung nicht ein. Teile und Prozentangaben beziehen sich auf das Gewicht, falls aus dem Zusammenhang nichts anderes hervorgeht.

### Beispiel 1. Kühlturmadditiv

20 Teile Natriumpolyacrylat mit einem Molekulargewicht von etwa 2'000 werden in 20 Teilen Wasser gelöst. Zu dieser Lösung gibt man eine Lösung von 20 Teilen Cumolsulfonat in 20 Teilen Wasser. Die Mischung wird mit Wasser auf 100 Teile ergänzt. Man erhält eine klare Lösung, die beliebig verdünnbar ist.

Die erfindungsgemässe Wirkung dieser Mischung zeigt sich darin, dass im Kapillartest der oben beschriebene Endpunkt von 3 MPa bei einer Zugabe von 50 ppm Polyacrylat zum Wasser nach 40 Minuten erreicht ist. Eine Zugabe von 50 ppm des erfindungsgemässen Additivs, berechnet auf Wirkstoff, ergab eine Standzeit von 80 Minuten. Wasser mit einem Gehalt von 50 ppm Cumolsulfonat allein zeigte eine nur um knappe 10 %erhöhte Standzeit im Vergleich zu Wasser ohne Additiv, welche zu 30 Minuten gemessen wurde.

Die Mischung aus Polyacrylat und Cumolsulfonat erweist sich in einem Zellvermehrungstest nach Bringmann und Kühn als inert und hat keinen biologischen Sauerstoffbedarf, weil die einzelnen Komponenten nicht als Nahrungsquelle für Mikroorganismen dienen können.

### Beispiel 2. Speisewasser-Additiv

Man löst 20 Teile Cumolsulfonat in 20 Teilen entmineralisiertem Wasser. Dazu gibt man 150 Teile Polycarbonsäuren als 50 %ige Handelsware, fügt 40 Teile Fettpolyamin hinzu und füllt auf 1000 Teile mit entmineralisiertem Wasser auf.

Eine Zugabe von 5 ppm dieses Mittels, auf das konfektionierte Produkt berechnet, zu Kesselspeisewasser ergibt die gleiche Wirkung wie eine Zugabe von 25 ppm der oben aufgeführten zweiten, bekannten Mischung.

### Beispiel 3. Speisewasser- und Kühlturmadditiv

Zum Speisewasseradditiv 1 gemäss Beispiel 2 wird noch eine Lösung von 7 Teilen technischer Tris-aminomethylenphosphonsäure, ein Threshold-Mittel, in 13 Teilen Wasser gegeben.

Dieses Mittel verbessert die Eigenschaften des Mittels nach Beispiel 2 weiter. Die Wirkung der ausgewählten Kombination hydrotroper Mittel zeigt sich überraschend in Form einer absolut klaren Lösung, wogegen Fettpolyamine mit Phosphonsäuren jeder Art und unabhängig von einem Zusatz anderer Polyamine und polymerer Carbonsäuren stets zu einem klebrigen Addukt führt, das in Wasser nicht mehr verteilbar ist.

### Beispiel 4. Kühlturmadditiv

150 Teile einer handelsüblichen Polycarbonsäure mit einem Molekulargewicht von etwa 2000 werden mit 100 Teilen Morpholin in die Salzform umgewandelt. Dann fügt man 150 Teile Cumolsulfonat als 50 %ige wässrige Lösung sowie 50 Teile Tris-aminomethylenphosphonat in technischer Form, gelöst in 150 Teilen Wasser zu und füllt auf 1000 Teile mit entmineralisiertem Wasser auf.

### Beispiel 5. Kühlturmadditiv

200 Teile einer handelsüblichen Polycarbonsäure mit einem Molekulargewicht von etwa 2000 werden mit 40 Teilen Butyldiglycolsulfat in 50 %iger wässriger Lösung vermischt. In die Mischung werden 40 Teile Fettpolyamin, z.B. nach FR-A-1'435'023, eingerührt, und das Ganze wird mit entmineralisiertem Wasser auf 1000 Teile aufgefüllt.

Man erhält eine klare, lagerstabile Lösung, die zum Zwecke der Kennzeichnung beispielsweise mit Methylenblau (2 Teile) angefärbt werden kann.

### Beispiel 6. Kühlturmadditiv

150 Teile einer handelsüblichen Polycarbonsäure mit einem Molekulargewicht von etwa 2000 werden mit 200 Teilen Imidazol versetzt. Zur Mischung werden 500 Teile Wasser und 150 Teile Butylglycolacetat, Cumolsulfonat oder Butyldiglycolsulfat als 50 %ige wässrige Lösung zugegeben.

### Beispiel 7. Kesselspeisewasseradditiv

150 Teile einer handelsüblichen Polycarbonsäure mit einem Molekulargewicht von etwa 2000 werden mit je 30 Teilen Diethanolamin und Cyclohexylamin vermischt. Dann werden 50 Teile Fettpolyamin, z.B. nach FR-A-1'435'023, sowie 30 Teile Cumolsulfonat als 50 %ige wässrige Lösung zugesetzt und das Ganze mit entmineralisiertem Wasser auf 1000 Teile aufgefüllt.

Die erfindungsgemässen Mittel können nach Wissen und Können des Fachmanns im Rahmen der Patentansprüche weiter abgewandelt werden. Insbesondere sind weitere, an sich übliche Zusätze wie Dosierhilfsmittel, Konservierungsmittel, Farbstoffe, Aromastoffe, Viskositätsregler, pH-Regler usw. möglich. Solche Zusätze werden von der Erfindung mitumfasst.

## Patentansprüche

1. Mittel zur Verhinderung der Ausscheidung von Kesselstein, kesselsteinähnlichen Ablagerungen und anderen Abscheidungen in Prozesswässern, enthaltend mindestens ein Salz von Polymeren ethylenisch ungesättigter Carbonsäuren, ausgewählt aus Polymaleaten, Polyacrylaten, Polymethacrylaten, Maleat-(Meth)Acrylat-Copolymeren, Acrylat-Methacrylat-Itaconat-Terpolymeren und Mischungen derselben, dadurch gekennzeichnet, dass es weiterhin mindestens ein hydrotropes Mittel zur Solubilisierung seiner Bestandteile enthält.

2. Mittel nach Anspruch 1, dadurch gekennzeichnet, dass es als wässrige Lösung vorliegt.

3. Mittel nach Anspruch 1 oder 2, dadurch gekennzeichnet, dass es weiterhin mindestens ein Fettpolyamin enthält.

4. Mittel nach Anspruch 3, dadurch gekennzeichnet, dass das Fettpolyamin der Formel
R―[―NH-(CH₂)₃-]ₙ―NH₂
entspricht, worin R einen aliphatischen Rest mit 12 bis 18 C-Atomen und n eine ganze Zahl von 1 bis 6 bedeuten.

5. Mittel nach einem der vorstehenden Ansprüche, dadurch gekennzeichnet, dass es als weiteren Bestandteil mindestens ein Phosphonsäurederivat enthält.

6. Mittel nach einem der vorstehenden Ansprüche, dadurch gekennzeichnet, dass das hydrotrope Mittel aus Verbindungen mit einem 4 bis 12 C-Atome enthaltenden gerad- oder verzweigtkettigen aliphatischen Rest, einem cycloaliphatischen Rest, oder einem ein- oder zweikernigen aromatischen System, das auch Ringheteroatome enthalten kann, und wobei die genannten Reste auch substituiert sein können, und mit mindestens einer wasserlöslich machenden Gruppe ausgewählt ist.

7. Mittel nach Anspruch 6, dadurch gekennzeichnet, dass die wasserlöslich machende Gruppe Carboxylat, Sulfonat, Sulfat, Phosphonat, Amino oder/und Hydroxyl ist.

8. Mittel nach Anspruch 6 oder 7, dadurch gekennzeichnet, dass die hydrotrope Verbindung zwischen dem Kohlenwasserstoffrest und der wasserlöslich machenden Gruppe durch eine oder mehrere Alkoxygruppen kettenverlängert ist.

9. Mittel nach einem der vorstehenden Ansprüche, dadurch gekennzeichnet, dass die polymere Carbonsäure als Salz eines Alkylamins, insbesondere eines biologisch schwer oder gar nicht abbaubaren Alkylamins, vorliegt.

10. Mittel nach Anspruch 1, dadurch gekennzeichnet, dass seine Wirkstoffe aus 30 bis 70 Gew.-% der polymeren Säure, gerechnet als etwa 50 %ige wässrige Einstellung, und 70 bis 30 Gew.-% der hydrotropen Verbindung bestehen.

11. Mittel nach Anspruch 3 oder 4, dadurch gekennzeichnet, dass seine Wirkbestandteile im Verhältnis von 30 bis 80 Teile polymere Carbonsäure, etwa 50 %ig, 20 bis 70 Teile Fettpolyamin und 5 bis 60 Teile hydrotrope Verbindung stehen, wobei sich die Teile auf das Gewicht beziehen.

12. Verfahren zur Verhinderung von Kesselstein und anderen Ausfällungen bzw. Ablagerungen in Prozesswasser sowie zur Konditionierung von Kühlwasserkreisläufen, dadurch gekennzeichnet, dass dem Prozesswasser ein Mittel nach einem der Ansprüche 1 bis 11 zugibt.

13. Verfahren nach Anspruch 12, dadurch gekennzeichnet, dass dem Wasser ein Mittel bestehend aus 5 bis 50, bevorzugt 10 bis 25 Teilen einer 50 %igen wässrigen Einstellung eines Polymeren als Salz ethylenisch ungesättigter Säuren, ausgewählt aus von Polyacrylaten, Polymethacrylaten, Maleat-(Meth)Acrylat-Copolymeren, Acrylat-Methacrylat-Itaconat-Terpolymeren und Mischungen derselben abgeleiteten Threshold-Mitteln und 1 bis 20, vorzugsweise 1 bis 6 Teilen eines hydrotropen Stoffes mit einem organischen Rest mit 4 bis 12 C-Atomen, der aliphatischer, cycloaliphatischer, aromatischer oder heterocyclischer Natur ist und mit mindestens einer wasserlöslich machenden Gruppe wie Carboxylat, Sulfat, Sulfonat, Phosphat, Phosphonat, Hydroxyl, Amino, gegebenenfalls auch mit einem oder mehreren Alkoxygruppen zwischen dem organischen Rest und der wasserlöslich machenden Gruppe, zugesetzt wird, wobei sich die genannten Teile auf das Gewicht beziehen.

14. Verfahren nach Anspruch 13, dadurch gekennzeichnet, dass das zugesetzte Mittel weiterhin 2 bis 15, vorzugsweise 2 bis 7 Teile, mindestens eines Fettpolyamins enthält.

15. Verfahren nach Anspruch 13 oder 14, dadurch gekennzeichnet, dass das Salz der polymeren Carbonsäure ein Alkylaminsalz ist.

16. Verfahren nach Anspruch 13, dadurch gekennzeichnet, dass das Polyamin der in Anspruch 4 angegebenen Formel entspricht.

17. Verfahren nach einem der vorstehenden Ansprüche 13 bis 16, dadurch gekennzeichnet, dass das zugesetzte Mittel zur Kühlturmkonditionierung in Mengen von 5 bis 100 ppm, bevorzugt etwa 50 ppm, und im Kesselspeisewasser in Mengen von 5 bis 50 ppm, vorzugsweise 5 bis 10 ppm, angewandt wird, wobei sich diese Mengen auf das Gewicht einer wässrigen, etwa 25 gew.-%igen Zubereitung der Wirkstoffe beziehen.
